Europäisches Patentamt

European Patent Office

Office européen des brevets

(11) Veröffentlichungsnummer: **0 218 749**
A2

(12) **EUROPÄISCHE PATENTANMELDUNG**

(21) Anmeldenummer: 85113123.5

(22) Anmeldetag: 16.10.85

(51) Int. Cl.⁴: **B 23 D 15/00**

(30) Priorität: 16.09.85 DE 3533012

(43) Veröffentlichungstag der Anmeldung:
22.04.87 Patentblatt 87/17

(84) Benannte Vertragsstaaten:
AT BE CH DE FR GB IT LI NL SE

(71) Anmelder: F.I.M. s.r.l.
Via Stalingrado, 16/3e
I-40128 Bologna(IT)

(72) Erfinder: Bianchi, Roberto
Via Vallescura N. 14
Bologna(IT)

(74) Vertreter: Patentanwälte Dr. Solf & Zapf
Zeppelinstrasse 53
D-8000 München 80(DE)

(54) Eckenschere.

(57) Eckenschere mit einem durch einen Stößel vertikal beweglichen Obermesser und einem am Arbeitstisch befestigten Untermesser, sowie einem Kolbenzylinderantrieb am Stößelende, wobei sich zwei weitere gleiche Kolbenzylinderantriebe (20) für den Stößel (8), die sich am Kolbenkopf (7) befinden, am Maschinengestell (1) abstützen.

FIG.1

EP 0 218 749 A2

Eckenschere
_____

Die Erfindung betrifft eine Eckenschere zum Ausschneiden von Ecken, z.B. aus einem Blech gemäß dem Oberbegriff
des Anspruchs 1.

Eine solche Eckenschere ist z.B. aus der DE-PS 26 01 858
bekannt. Diese Eckenschere weist neben den anderen üblichen Teilen einen Stößel auf, dessen Axialführung durch
drei Zapfenführungen bewirkt wird, von denen zwei im
Abstand voneinander am Stößelkopf und am Maschinengestell
jeweils seitlich neben und hinter dem Schneidspalt und
eine am unteren Stößelende angeordnet sind. Die Zapfenführungen bestehen jeweils aus einem Zapfen und einer
Führungsbuchse, die über ein Kugelschalengelenk miteinander in Verbindung stehen. Das Kugelschalengelenk besteht
aus einer am Zapfenende oder zumindest in dessen Nähe
angeordneten Gelenkkugel und einer in der Führungsbuchse
axial verschieblichen und dazu konzentrisch angeordneten
Kugelschale. Die Kugelschale ist an einer in der zugeordneten Führungsbuchse der Zapfenführung axial verschieblichen Montagebuchse befestigt. Bei dieser Anordnung ist zwischen dem Führungszapfen und der Montage-

- 2 -

buchse ein radialer Abstand vorgesehen der es ermöglicht, daß der Stößel aus seiner senkrechten Stellung um die am Stößelende angeordnete Zapfenführung kippen kann. Diese Schrägstellung des Stößels, die aus einer höheren Kantenpressung am Schneidspalt resultieren kann, soll die Schnittqualität fördern.

Die Schrägstellung des Stößels bewirkt aber auch eine entsprechend schräge Kante an der Schnittstelle des Blechs, so daß insoweit die Schnittqualität wiederum gemindert ist. Außerdem sind die Führungselemente für den Stößel sehr aufwendig und kompliziert.

Als Antrieb für den Stößel ist bei der bekannten Eckenschere ein seitlich vorne am Stößel - in der Schwereachse der Messer positioniert - fest angeordneter Hydraulikzylinder vorgesehen, der mit einem am Maschinengestell oberhalb des Hydraulikzylinders befestigten Kolben zusammenwirkt. Der Kolben hat eine Axialbohrung, über welche für den Arbeitshub des Stößels Öl gegen den Boden des Zylinders gedrückt wird. Für den Rückhub des Stößels sollen Rückstellfedern vorhanden sein.

Die bekannte Eckenschere ist somit mit drei Zapfenführungen und einem gesonderten Antrieb ausgerüstet. Es ist verständlich, daß der Antrieb eine relativ große Bauform aufweisen muß, weil er bei dicken Blechen relativ große Kräfte aufbringen muß. Zudem ist der Kraftansatzpunkt bei einem einzigen Antrieb, selbst wenn er in der Schwereachse positioniert ist, nicht optimal.

Eine aus der DE-PS 24 57 885 bekannte Eckenschere weist ein Antriebsmittel am unteren Ende des Stößels auf, das

- 3 -

ebenso groß dimensioniert sein muß wie bei der aus der DE-PS 26 01 858 bekannten Eckenschere. Das Antriebsmittel besteht aus einem feststehenden Kolben, der in einem mit dem Stößel einstückig ausgebildeten Zylinder so angeordnet ist, daß zwei Druckkammern entstehen, die zum Anheben und Absenken des Stößels abwechselnd mit einem Druckmedium gefüllt und entleert werden. Aufwendig ist die einstückige Ausgestaltung des Zylinders mit dem Stößel. Bezüglich des Kraftansatzpunkts gilt der gleiche, oben im Zusammenhang mit der DE-PS 26 01 858 beschriebene Nachteil.

Die Führung des Stößels der aus der DE-PS 24 57 885 bekannten Eckenschere wird durch eine am unteren Ende des Stößels angeordnete Zapfenführung gewährleistet. Sie besteht aus zwei am Boden des Maschinengestells befestigten Zapfen und zwei zugehörigen Führungsbuchsen die seitlich neben dem Antriebszylinder angeordnet und ebenfalls einstückig mit dem Stößel ausgebildet sind. Zur seitlichen Abstützung des aus einem rohrförmigen Hohlkörper bestehenden Stößels ist in unmittelbarer Nähe des Arbeitstischs konzentrisch ein Abstützlager am Maschinengestell vorgesehen, damit der Stößel nicht aus der senkrechten Achse gedrängt werden kann. Insgesamt ist diese bekannte Eckenschere konstruktiv aufwendig.

Bekanntlich ist es für eine optimale Schnittqualität und Kraftoptimierung bei einer Eckenschere erwünscht, den horizontalen Abstand zwischen der Schneide der Obermesser und der Schneide der Untermesser auf die Blechdicke abzustimmen,d.h. einen relativ großen Abstand zu wählen, wenn Ecken aus dicken Blechen ausgeklinkt werden sollen und den Abstand zu verringern, wenn Ecken

- 4 -

aus dünneren Blechen auszuklinken sind. Die Veränderung des Abstandes ist sehr schwer zu bewerkstelligen, weil es sich um Unterschiede handelt, die im Hundertstel-Millimeter-Bereich liegen.

Aufgabe der Erfindung ist, eine Eckenschere zu schaffen, die mit einfachen Mitteln im Vergleich zum Stand der Technik einen günstigeren Kraftansatz ermöglicht. Aufgabe ist zudem, eine automatische horizontale Abstandseinstellung zwischen Ober- und Untermesser zu gewährleisten.

Diese Aufgaben werden durch die Merkmale der Ansprüche 1, 9 und 26 gelöst. Vorteilhafte Weiterbildungen der Erfindung werden in den davon abhängigen Unteransprüchen gekennzeichnet. Anhand der Zeichnung wird die Erfindung beispielhaft näher erläutert. Es zeigen:

Fig. 1 einen Vertikalschnitt durch die Eckenschere entlang der Linie I - I in Fig. 2,

Fig. 2 eine Draufsicht auf die Eckenschere,

Fig. 3 einen Schnitt durch ein oberes Antriebsmittel entlang der Linie III - III in Fig. 1,

Fig. 4 einen Schnitt durch das untere Antriebsmittel entlang der Linie IV - IV in Fig. 1,

Fig. 5 den Stößelkopf von der Seite (teilweise geschnitten) mit einer Vorrichtung für die horizontale Verschiebbarkeit der Obermesser,

- 4a -

Fig. 6 einen Schnitt durch den Stößelkopf entlang der Linie VI - VI in Fig. 5 in Blickrichtung in Pfeilrichtung,

Fig. 7 einen Schnitt durch den Stößelkopf entlang der Linie VII - VII in Fig. 8 mit einer anderen Vorrichtung für die horizontale Verschiebbarkeit der Obermesser, und

Fig. 8 eine Draufsicht auf den Stößelkopf (teilweise geschnitten) mit der anderen Vorrichtung für die horizontale Verschiebbarkeit der Obermesser.

- 5 -

Das Maschinengestell 1 der Eckenschere weist im wesentlichen eine Arbeitstischplatte 2 und eine Bodenplatte 3
auf. Durch zwei senkrecht stehende vordere Säulen 4 und
zwei senkrecht stehende hintere Säulen 5, die in der
Draufsicht im Viereck angeordnet sind, werden die Platten
2 und 3 auf vertikalem Abstand gehalten, wobei jeweils
der Kopfbereich der Säulen 4 und 5 in der Tischplatte 2
und der Fußbereich in der Bodenplatte 3 befestigt sind.
Seitlich weist das Maschinengestell 1 Abdeckbleche auf,
so daß sich ein geschlossenes Maschinengestell 1 ergibt.
Im Innenraum des Maschinengestells 1 sind die für den
Betrieb der Maschine erforderlichen Elemente, wie z.B.
Hydraulikaggregate, Schalterelemente, Anzeigen und dgl.
Hilfsmittel untergebracht (nicht dargestellt).

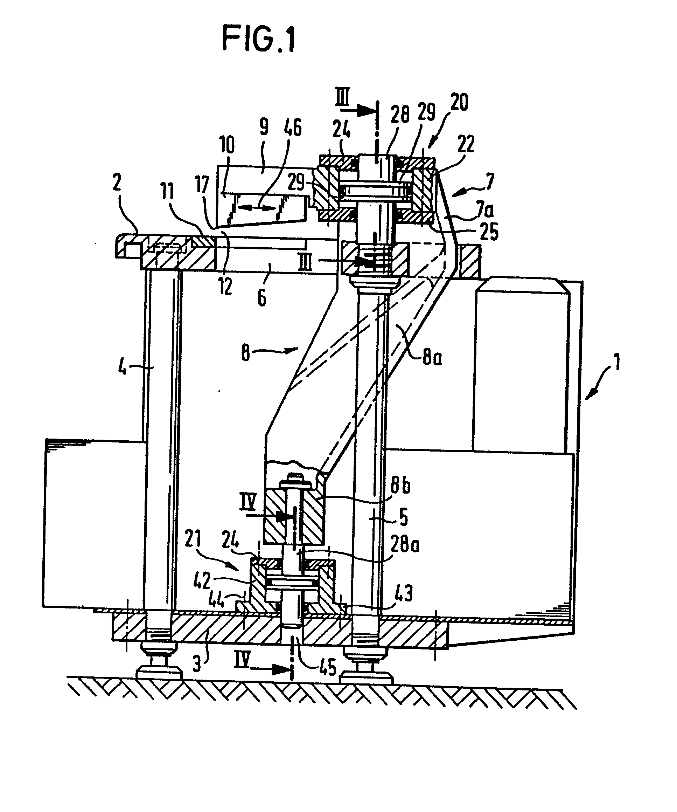

In der Arbeitstischplatte 2 ist eine Ausnehmung bzw.
ein Loch 6 im wesentlichen zentral angeordnet, das sich
von der Seite betrachtet (Fig. 1) etwa von den vorderen
Säulen 4 nach hinten bis über die hinteren Säulen 5
hinaus erstreckt. Diese Ausnehmung 6 wird vom Stößelkopf 7 des Stößels 8 durchgriffen, wobei die Konturen
der Ausnehmung 6 etwa der Querschnittsraumform des Stößelkopfs 7 angepaßt sind.

Der Stößelkopf 7 weist eine horizontal angeordnete Tragplatte 9 auf, deren vorderer d.h. zu den Säulen 4 weisender Bereich in der Draufsicht dreieckig ist und in an
sich bekannter Weise an den Außenkanten zwei V-förmig
zueinander angeordnete Obermesser 10 lagert. Der hintere
Bereich der Tragplatte 9 ragt flügelartig seitlich über
den Stößel 8, so daß horizontale Seitenstege 7c entstehen,
zwischen denen und der Tischplatte 2 ein Freiraum ge-

- 6 -

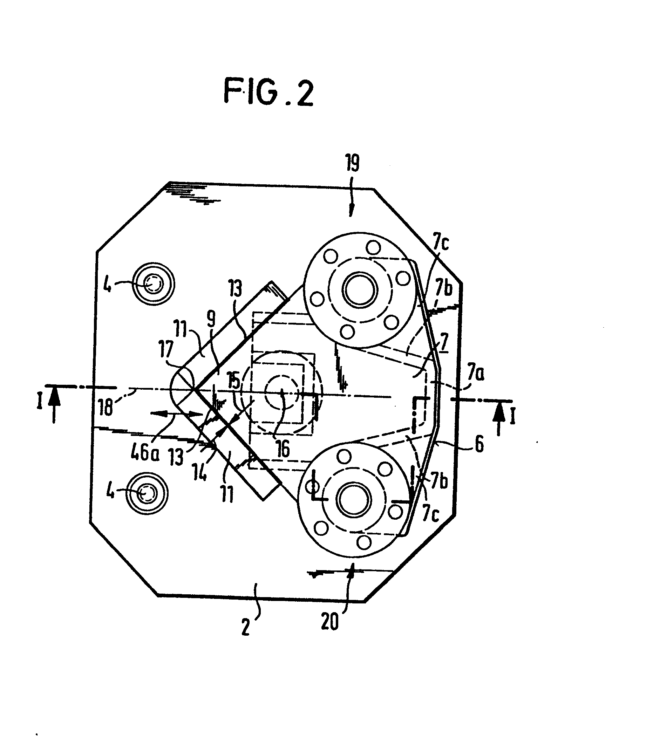

bildet wird und die sich über den hinteren Säulen 5 befinden. Die Innenkante der Ausnehmung 6 lagert die zwei ebenfalls V-förmig zueinander angeordneten Untermesser 11, so daß sich ein vertikaler Schnittspalt 12 in der Ausgangsstellung des Stößels 8 ergibt. Die Schneidkanten der Obermesser 10 sollen mit den Schneidkanten der Untermesser 11 einen, wenn auch minimalen, horizontalen Schnittspalt 13 bilden, der in Fig. 2 in Form einer dick gezeichneten Linie angedeutet ist und durch die gegeneinander gerichteten Pfeile 14 und 15 verdeutlicht werden soll und der für ein dickeres Blech breiter eingestellt sein soll als für ein dünneres Blech. Wie das im Rahmen der Erfindung bewerkstelligt wird, wird weiter unten erläutert.

Der Stößelkopf 7 des vorzugsweise einstückig aus einem Gußteil hergestellten Stößels 8 bildet unterhalb der Tragplatte 9 rückwärtig hinter den Messern zur Erzielung einer größeren Stanztiefe, wie an sich bekannt, einen Aufnahmeraum. Demgemäß ist der Stößelkopf 7 in der Draufsicht betrachtet, unterhalb der Tragplatte 9 etwa U-förmig ausgebildet, wobei sich der Quersteg 7a im Rücken der Maschine befindet und die U-Schenkel 7b in Richtung der Messer 10, 11 weisen. Vom Stößelkopf 7 nach unten erstreckt sich der Stößelsteg 8a, nach einer besonderen Ausführungsform der Erfindung schräg nach vorne (Fig. 1) und mündet in den vertikal angeordneten Stößelfuß 8b, so daß der Stößel 8, von der Seite betrachtet, wie die arabische Zahl 7 aussieht (Fig. 1). Durch diese Raumform wird erreicht, daß sich der Stößelfuß 8b in der vertikalen Schwereachse 16 des Stößels 8 befindet, die durch die Mitte der zwischen den Hinterkanten der Messer gedachten Verbindungslinie (nicht dargestellt) geht (Fig. 2).

Die Erfindung sieht mindestens zwei, vorzugsweise drei gleichartige Kolbenzylinderantriebe für den Stößel 8 vor, die ihn nicht nur antreiben, sondern auch seine Lagerung bilden und eine minimale Verschiebung in horizontaler Richtung ermöglichen, so daß der horizontale Schnittspalt 13 sich automatisch verstellt und sich auf die für die jeweilige Blechdicke optimale Schnittspaltbreite einstellt.

Nach der Erfindung befinden sich in den Seitenstegen 7c des Stößelkopfs 7 zwei gleiche, sich z.B. auf der Arbeitstischplatte 2 abstützende Kolbenzylinderantriebe 19, 20 hinter den Messern und zwar im gleichen Abstand seitlich neben der vertikalen Querschnittsebene 18, die durch die Messerspitze 17 und die Schwereachse 16 geht (Fig. 2). Der dritte sich auf der Bodenplatte 3 abstützende Kolbenzylinderantrieb 21 befindet sich am Fuß 8b des Stößels 8.

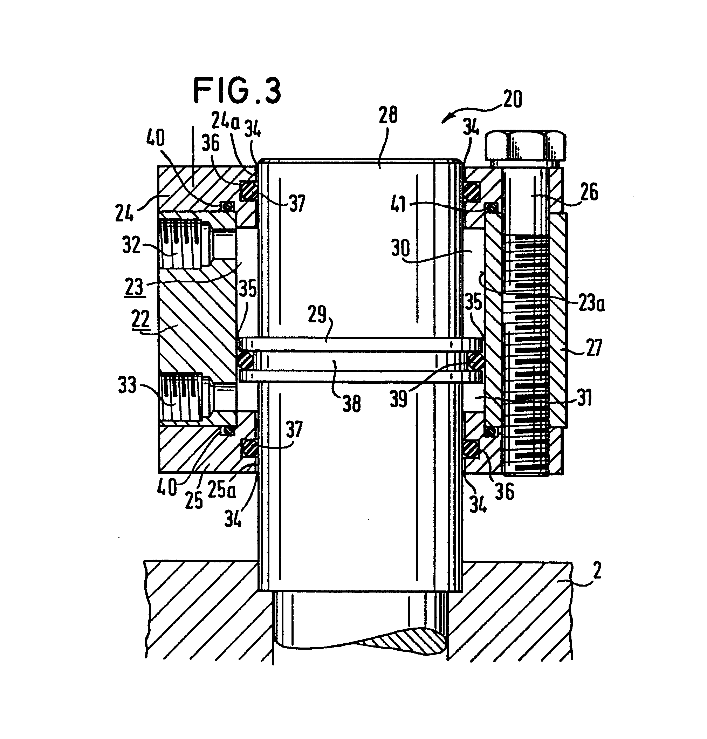

Vorzugsweise ist für die Kolbenzylinderantriebe 19, 20 je eine sich vertikal erstreckende Zylinderkammer 23 in den Seitenstegen 7c der Tragplatte 9 eingeformt. Es können aber auch Zylinder 22 mit Zylinderkammern 23 als gesonderte Teile angesetzt und mit dem Stößelkopf 7 verbunden sein. Die Zylinderkammer 23 wird mit einer oberen Flanschringplatte 24 und einer unteren Flanschringplatte 25 abgedeckt und mit Schrauben 26, die in die Zylinderwandung 27 greifen, am Zylinder 22 befestigt. Die zentralen Löcher 24a und 25a der Flanschringplatten 24, 25 sind gleich groß, fluchten vertikal miteinander

- 8 -

und sind im Durchmesser kleiner als der Durchmesser
der Zylinderkammer 23 beträgt (Fig. 3). Die Zylinderkammer 23 durchgreift eine vertikal ausgerichtete Kolbenstange 28,die in der Tischplatte 2 befestigt ist und
im in der Zylinderkammer 23 befindlichen Bereich einen
Kolbenring 29 aufweist. Der Kolbenring 29 ist derart
angeordnet, daß ein oberer Druckringraum 30 und ein
unterer Druckringraum 31 entstehen. Zum oberen Druckringraum 30 führt eine Druckmittelöffnung 32 durch die
Zylinderwandung 27 und zum unteren Druckringraum 31
eine Druckmittelöffnung 33. Der Durchmesser der Kolbenstange 28 entspricht dem Durchmesser der zentralen
Flanschringdurchgänge bzw. Löcher 24a, 25a in den
Flanschringplatten 24, 25,während der Durchmesser des
Kolbenrings 29 dem Durchmesser der Zylinderkammer 23
entspricht.

Zur vertikalen Abdichtung der Kolbenzylinderanordnung
sind mehrere Ringdichtungen vorgesehen. Es befinden sich
zu diesem Zweck in den Oberflächen der Löcher 24a, 25a
der Flanschringe 24, 25 Ringnuten 36,in denen
elastische Dichtringe 37 sitzen, die sich jeweils gegen
den Boden der Ringnut 36 und gegen die Oberfläche der
Kolbenstange 28 abstützen. Vorteilhaft ist, wenn auch
im Kolbenring 29 eineRingnut 38 angeordnet ist, in der
ebenfalls ein      elastischer Dichtring 39 lagert, der
sich gegen den Boden der Ringnut 38 und gegen die Innenwandung 23a der Zylinderkammer 23 abstützt. Zusätzlich
können in den Flanschringen 24, 25 zur Zylinderwandung
gerichtete Ringnuten 40 vorgesehen sein, in denen Dichtringe 41 lagern, so daß das Kolbenzylindersystem auch
in horizontaler Richtung abgedichtet ist.

- 9 -

Wesentlich ist, daß zwischen der Kolbenstange 28 und
der Innenwandung der Flanschringlöcher 24a, 25a ein
Ringspalt 34 freibleibt, ebenso wie zwischen dem Kolbenring 29 und der Innenwandung 23a der Zylinderkammer 23
ein Ringspalt 35 vorgesehen ist (Fig. 3). Die Ringspalte
34 und 35 sind vorzugsweise gleich breit und ermöglichen
eine horizontale Verschiebung des Stößels 8 relativ zu
den Kolbenstangen 28. Diese Verschiebbarkeit bewirkt
automatisch die gewünschte horizontale Veränderung des
Schnittspalts 13 zwischen den Obermessern 10 und den
Untermessern 11, weil der Stößel seine optimale Stellung
selbsttätig wählen kann. In der Ausgangsstellung befindet
sich die Kolbenstange 28 zentral in der Zylinderkammer
23 aufgrund der Wirkung der Dichtringe 37 und 39. Soll
eine Ecke aus einem Blech einer bestimmten Mindestdicke
ausgeklinkt werden, fährt der Stößel nach unten und die
Messerspitze 17 der Obermesser 10 trifft auf die Blechoberfläche. Der Stößel weicht nicht horizontal aus, weil
seine Stellung die Spaltbreite aufweist, die dieser Blechdicke und der zu erwartenden Ausklinkkraft entspricht.
Bei einem dickeren Blech trifft die Messerspitze 17 eher
auf die Blechoberfläche, der Widerstand ist größer, der
Stößel 8 weicht entsprechend dem Widerstand horizontal
zurück, so daß der Schnittspalt 13 sich erweitert. Nach
dem Ausklinken wird der Stößel 8 insbesondere durch die
Dichtringe 37 und 39 in seine Mittelstellung bzw. Ausgangsstellung zurückgedrückt.

Die Ringspalte 34, 35, die zur Erweiterung
des Schnittspalts 13 erforderlich sind, sind minimal,
dennoch aber äußerst effektiv. Ihre Breite liegt vorzugsweise
für zu schneidende Blechdicken von 2 bis 6 mm zwischen

- 10 -

0,03 und 0,08 mm. Andere Blechdicken und/oder besondere Blechsorten erfordern ggf. andere Spaltbreiten.

Eine besondere Ausführungsform der Erfindung sieht vor, daß die Kolbenstangen 28 einstückig als obere Verlängerungen der hinteren Säulen 5 ausgebildet sind (Fig. 1). Diese Bauweise dient nicht nur der Vereinfachung des Aufbaus der Eckenschere, sondern ergibt auch eine optimale Abstützung der Schneidkräfte, insbesondere dann, wenn die Säulen 5 nicht mit der Tischplatte 2 verbunden sind, sondern lediglich ein Loch in der Tischplatte durchgreifen.

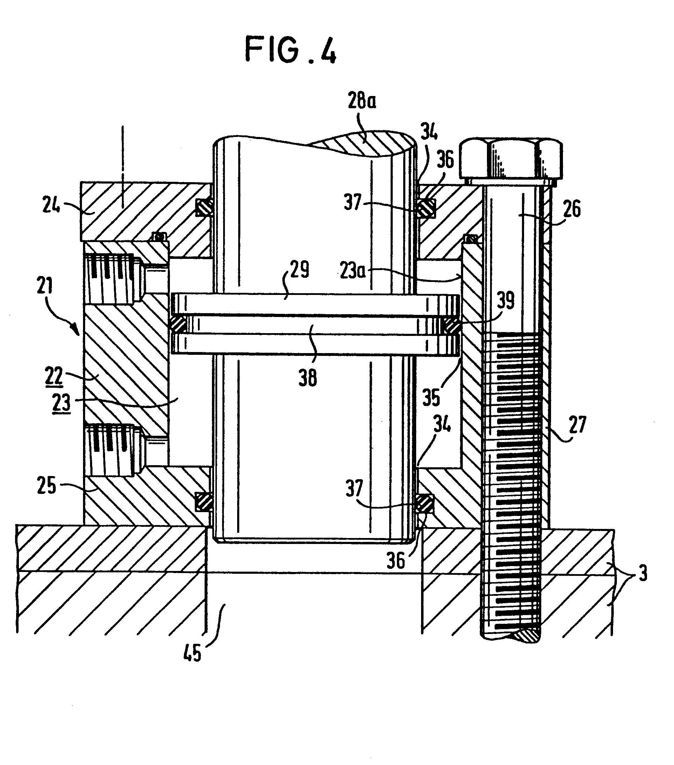

Für den unteren Antrieb 21 ist zweckmäßigerweise ein Zylinder 42 auf der Bodenplatte 3 fest angeordnet. Z.B. weist der Zylinder 42 einen unteren Flanschring 43 auf, der mit Schrauben 44 auf die Bodenplatte 3 geschraubt ist (Fig. 1). Oder der Aufbau des Antriebs 21 entspricht z.B. dem gemäß Fig. 3, wie aus Fig. 4 ersichtlich ist. Im Unterschied zur Ausführungsform nach Fig. 3 ist der Zylinder 22 feststehend angeordnet und die Kolbenstange 28a vertikal beweglich gelagert. Die Kolbenstange 28a ist zentral im Fuß 8b des Stößels 8 befestigt (Fig. 1) und erstreckt sich mit seinem freien Endbereich in ein im Boden 3 angeordnetes Loch 45, das einen größeren Durchmesser aufweist, als der Durchmesser der Kolbenstange beträgt.

Da der Kolbenzylinderantrieb 21 wie die Kolbenzylinderantriebe 19 und 20 aufgebaut ist, ermöglicht auch er eine horizontale Verschiebbarkeit des Stößels 8. Der Antrieb 21 kann aber auch, wie an sich bekannt, umgekehrt aufgebaut sein, d.h. daß die Kolbenstange fest

- 11 -

auf der Bodenplatte 3 und der Zylinder fest unter dem
Stößelfuß 8b angeordnet sind. Wesentlich aber ist, daß
der Antrieb 21 sich mit seiner Wirkachse in der Schwereachse 16 befindet, was nach der Erfindung durch die beschriebene besondere Form des Stößels 8 bewirkt wird.

Durch die Wahl von insbesondere drei Antrieben 19, 20
und 21, von denen einer in der Schwereachse 16 und zwei
in unmittelbarer Nähe des Schnittspalts 35 wirken, ergibt sich eine Kleinbauweise der Antriebe und eine optimale Kraftverteilung beim Ausklinken. Außerdem wird ein
horizontales Verschieben des Stößels 8 gewährleistet,
für das jeweils ein Ringspalt zwischen Kolbenstange und
Flanschringwandung bzw. zwischen Kolbenring und Zylinderkammerwandung vorgesehen werden kann.

Nach einer anderen Ausführungsform der Erfindung sind
zur automatischen Veränderung des Schnittspalts 13 die
Obermesser 10 en bloc gegen eine Federkraft horizontal
nach hinten verschiebbar                        · gelagert.
Der Verschiebeweg entspricht dem beschriebenen horizontalen Verschiebeweg des Stößels. Diese Verschiebbarkeit
der Obermesser 10 kann in Kombination mit der Verschiebbarkeit des Stößels 8 oder aber alleinig vorgesehen sein.
Eine weitere erfindungsgemäße Variante zum gleichen Zweck
beinhaltet alleinig oder in Kombination mit der Verschiebbarkeit der Obermesser 10 und/oder mit der Verschiebbarkeit des Stößels 8 eine horizontale Verschiebbarkeit
der Untermesser 11 en bloc gegen eine Federkraft nach
vorne z.B. in ihrer Lagerung. Diese Variante der Erfindung
wird in Fig. 1 mit dem Doppelpfeil 46 und in Fig. 2 mit
dem Doppelpfeil 46a angedeutet.

- 12 -

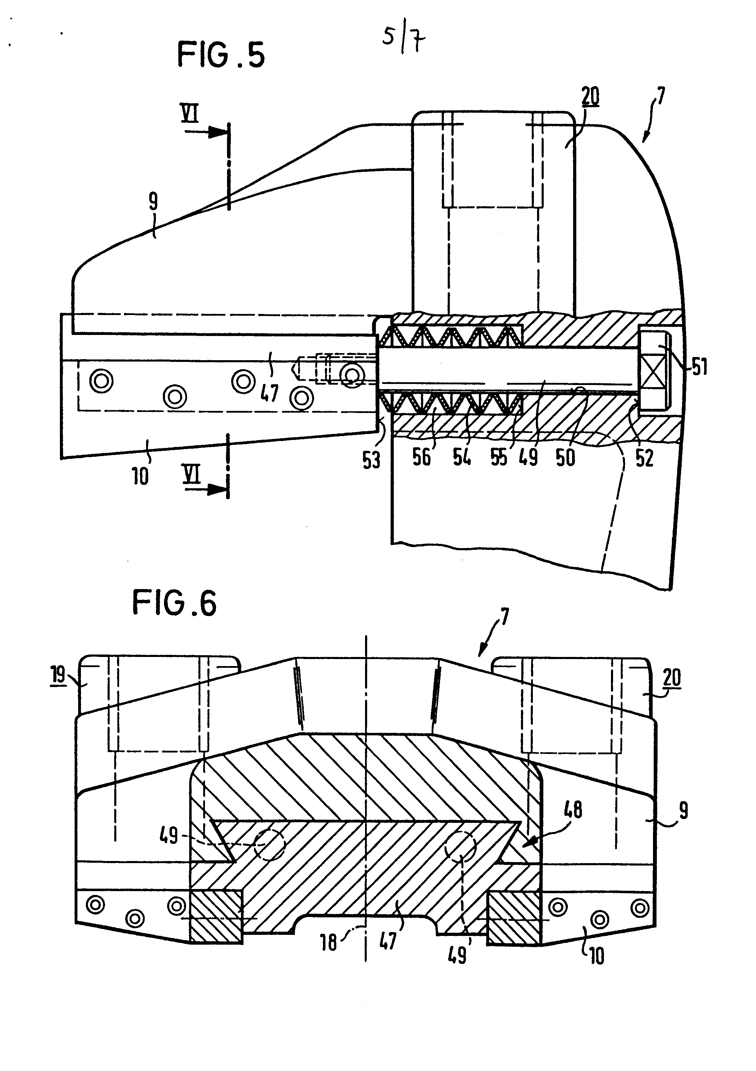

Nach einer in den Figuren 5 und 6 abgebildeten Ausführungsform der Erfindung sind die Obermesser an den Seitenkanten eines in der Draufsicht dreieckförmigen Schlittens 47 befestigt, der horizontal gleitbar und formschlüssig geführt unter der Tragplatte 9 lagert. Die formschlüssige Führung erfolgt zweckmäßigerweise mit einer seitlichen Schwalbenschwanzführung 48. Rückwärtig an der Hinterkante 53 sitzen an Schlitten 47 horizontal und nach hinten ausgerichtete Gleitbolzen 49 beiderseits neben der vertikalen Querschnittsebene 18, die jeweils in einem im Stößelkopf 7 angeordneten Führungsloch 50 formschlüssig geführt werden, das Führungsloch 50 durchgreifen und nach hinten überragen, wobei der verbreiterte Bolzenkopf 51 gegen eine am Stößelkopf 7 vorgesehene Lagerkante 52 anliegt. Zwischen der Hinterkante 53 des Schlittens 47 und einem Anschlag im Stößelkopf 7 ist ein Zwischenraum vorgesehen, so daß der Schlitten 47 horizontal verschiebbar ist. Auf dem Gleitbolzen 49 sitzt eine Druckfeder 54, die sich einerseits gegen die Hinterkante 53 des Schlittens 47 abstützt und andererseits eine Bodenkante 55 in einen für ihre Lagerung vorgesehenen im Stößelkopf 7 konzentrisch zum Loch 50 angeordneten Ringraum 56 drückt. Die Druckfeder kann zweckmäßigerweise aber auch zwischen Bolzenkopf 51 und Lagerkante 52 angeordnet sein (nicht dargestellt). Die beschriebene Lagerung des Schlittens 47 ermöglicht eine horizontale Gleitbewegung gegen die Kraft der Druckfeder 54.

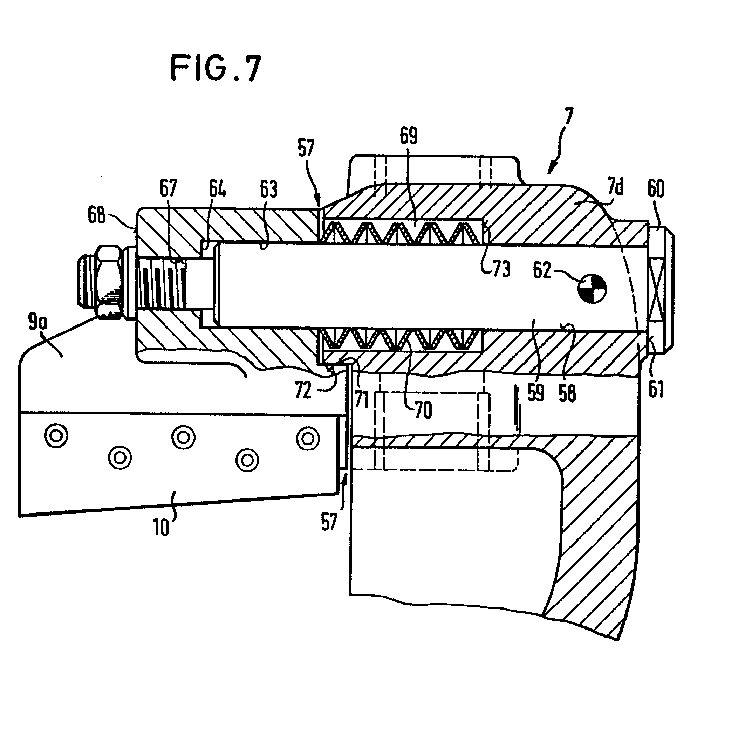

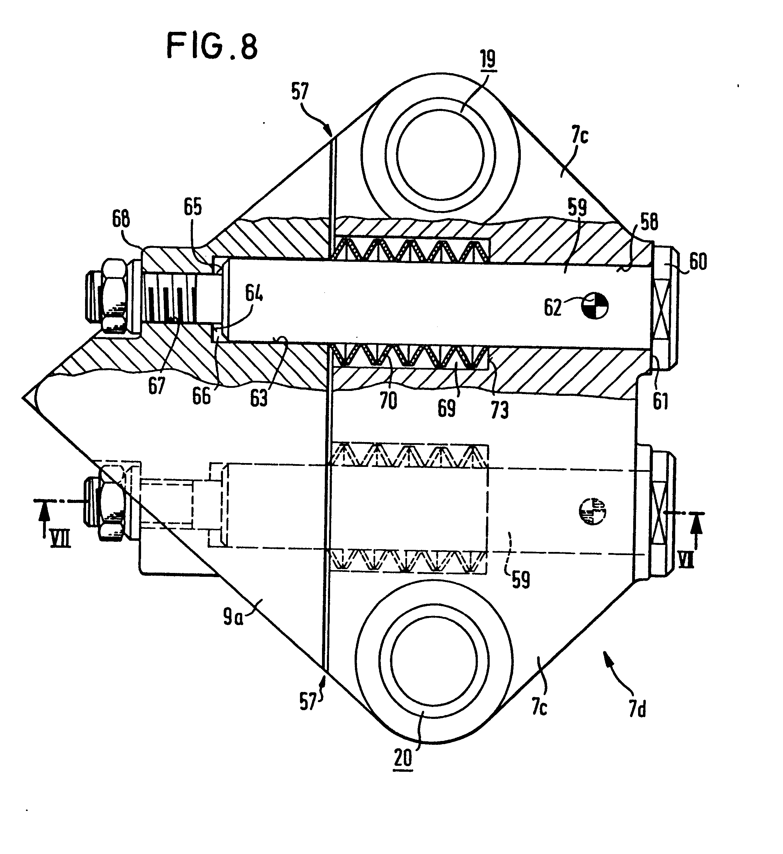

Die andere in den Figuren 7 und 8 abgebildete Ausführungsform der Erfindung sieht vor, daß der die Obermesser 10 tragende Teil 9a der Tragplatte 9 als separates Teil ausgebildet ist und horizontal gleitbar am Stößelkopf 7

- 13 -

lagert, wobei dafür zwischen dem Messerträgerteil 9a und dem hinteren Stößelkopfteil 7d ein Spalt 57 vorgesehen ist. Die Führung und Lagerung des Messerträgerteils 9a kann wie beim Ausführungsbeispiel nach Figuren 5 und 6 erfolgen, wobei die Bolzen 49 dann am Messerträgerteil 9a befestigt sind. Zur Führung und Lagerung können aber auch zwei seitlich nebeneinander und jeweils neben der vertikalen Querschnittsebene 18 in einem Loch 58 im Stößelkopf 7d formschlüssig sitzende und gegen eine Horizontalbewegung gesicherte Bolzen 59 dienen, deren rückwärtiger Kopf 60 an einer Anschlagkante 61 am Stößelkopf 7 anliegt und die mit einem ihren Schaft durchquerenden, sich am Stößelkopfteil 7d abstützenden Querstift 62 gesichert sind. Der vordere, aus dem Stößelkopfteil 7d ragende Bereich des Bolzens 59 erstreckt sich formschlüssig in ein im Messerträgerteil 9a vorgesehenes Gleitführungsloch 63, wobei zwischen der Vorderkante 64 des Lochs 63 und der Vorderkante 65 des Bolzens 59 ein Freiraum 66 vorgesehen ist, der breiter als der Spalt 57 ist. Der Bolzen 59 setzt sich nach vorne verjüngt fort, durchgreift frei ein im Vergleich zum Gleitführungsloch 63 engeres Loch 67 im Messerträgerteil 9a, wobei auf den aus dem Loch 67 ragenden Bereich des verjüngten Endes des Bolzens 59 eine Schraube geschraubt ist, die sich gegen eine Kante 68 am Messerträgerteil 9a abstützt.

Vom Spalt 57 nach hinten ist ein Ringraum 69 im Stößelkopfteil 7d konzentrisch zum Loch 58 eingebracht, in dem eine auf dem Bolzen 59 sitzende Druckfeder 70 lagert und sich gegen die Bodenkante 73 des Ringraums 69 sowie gegen die Hinterkante des Messerträgerteils 9a abstützt.

- 14 -

Zweckmäßig ist, eine horizontal vorspringende Gleitfläche 71 am Stößelkopfteil 7d unterhalb des Ringraums
69 und eine horizontal vorspringende Gleitfläche 72
am Messerträgerteil 9a vorzusehen, die aneinanderliegen
und vertikal wirkende Kräfte beim Schneiden aufnehmen
können. Der Spalt 57 ist so groß bemessen, daß die Obermesser um den gewünschten Betrag zur Verbreiterung des
Schneidspalts 13 gegen der Druck der Feder 70 zurückweichen können.

Ansprüche

1. Eckenschere mit einem durch einen Stößel vertikal beweglichen Obermesser und einem am Arbeitstisch befestigten Untermesser, sowie einem Kolbenzylinderantrieb am Stößelende, g e k e n n z e i c h n e t d u r c h zwei weitere gleiche Kolbenzylinderantriebe (19, 20) für den Stößel (8), die sich am Kolbenkopf (7) befinden und am Maschinengestell (1) abstützen.

2. Eckenschere nach Anspruch 1, d a d u r c h g e - k e n n z e i c h n e t , daß sich die Kolbenzylinderantriebe (19, 20) in den Seitenstegen (7c) des Stößelkopfes (7) befinden und sich auf der Tischplatte (2) abstützen.

3. Eckenschere nach Anspruch 1 und/oder 2, d a d u r c h g e k e n n z e i c h n e t , daß die Kolbenzylinderantriebe (19, 20) hinter den Messern und zwar im gleichen Abstand seitlich neben der Querschnittsebene (18), die durch die Messerspitze (17) und die Schwereachse (16) geht, angeordnet sind.

4. Eckenschere nach einem oder mehreren der Ansprüche 1 bis 3, d a d u r c h g e k e n n z e i c h n e t ,

daß sich der dritte am Fuß (8b) des Stößels (8) befindliche Kolbenzylinderantrieb (21) auf der Bodenplatte (3) abstützt.

5. Eckenschere nach Anspruch 4, d a d u r c h    g e -
k e n n z e i c h n e t ,  daß der Kolbenzylinderantrieb (21) sich in der Schwereachse (16) des Stößels (8) befindet.

6. Eckenschere nach einem oder mehreren der Ansprüche 1 bis 5, d a d u r c h    g e k e n n z e i c h n e t, daß für die Kolbenzylinderantriebe (19, 20) je eine sich vertikal erstreckende Zylinderkammer (23) in die Seitenstege (7c) der Tragplatte (9) eingeformt ist.

7. Eckenschere nach einem oder mehreren der Ansprüche 1 bis 5, d a d u r c h    g e k e n n z e i c h n e t , daß Zylinder (22) mit Zylinderkammern (23) als gesonderte Teile für die Kolbenzylinderantriebe (19, 20) angesetzt und mit dem Stößelkopf (7)    verbunden sind.

8. Eckenschere nach Anspruch 6 und/oder 7, d a d u r c h    g e k e n n z e i c h n e t ,  daß die Zylinderkammer (23) mit einer oberen Flanschringplatte (24) und einer unteren Flanschringplatte (25) abgedeckt ist, in denen Löcher (24a) und (25a) vertikal miteinander fluchtend angeordnet sind, deren Durchmesser kleiner als der Durchmesser der Zylinderkammer (23) ist, wobei die Zylinderkammer (23) eine vertikal ausgerichtete Kolbenstange (28) durchgreift, die in der Tischplatte be-

- 3 -

festigt ist und im in der Zylinderkammer (23) befindlichen Bereich einen Kolbenring (29) aufweist, der derart angeordnet ist, daß ein oberer Druckringraum (30)
und ein unterer Druckringraum (31) entstehen und wobei
zum oberen Druckringraum (30) eine Druckmittelöffnung
(32) durch die Zylinderwandung (27) und zum unteren
Druckringraum (31) eine Druckmittelöffnung (33) führen.

9. Eckenschere mit einem durch einen Stößel vertikal beweglichen Obermesser und einem am Arbeitstisch befestigten Untermesser, sowie
einem Antrieb für den Stößel, insbesondere nach einem oder mehreren
der Ansprüche 1 bis 8, d a d u r c h   g e k e n n z e i c h n e t,
daß die Kolbenzylinderantriebe an den Berührungsstellen zwischen
Kolben und Zylinder mit Toleranzen ausgebildet sind, die eine horizontale Verschiebbarkeit des Kolbens oder des Zylinders ermöglichen.

10. Eckenschere nach Anspruch 9,   d a d u r c h   g e -
k e n n z e i c h n e t ,   daß zwischen der Kolbenstange (28, 28a) und der Innenwandung der Flanschringlöcher (24a, 25a) ein Ringspalt (34) freibleibt,
ebenso wie zwischen dem Kolbenring (29) und der
Innenwandung (23a) der Zylinderkammer (23) ein Ringspalt (35) vorgesehen ist.

11. Eckenschere nach Anspruch 10, d a d u r c h   g e -
k e n n z e i c h n e t ,   daß die Ringspalte (34)
und (35) gleich breit sind.

12. Eckenschere nach einem oder mehreren der Ansprüche
9 bis 11, d a d u r c h   g e k e n n z e i c h -
n e t ,   daß die Toleranzen zwischen den Kolben und
den Zylindern an den Berührungsstellen für das Schneiden von Blechdicken von 2 bis 6 mm zwischen 0,03 und

- 4 -

0,08 mm liegen.

13. Eckenschere nach einem oder mehreren der Ansprüche 9 bis 12, d a d u r c h g e k e n n z e i c h - n e t , daß sich in der Oberfläche der Löcher (24a) und (25a) Ringnuten (36) befinden, in denen elastische Dichtringe (37) sitzen, die sich jeweils gegen den Boden der Ringnuten (36) und gegen die Oberfläche der Kolbenstange (28) abstützen.

14. Eckenschere nach Anspruch 13, d a d u r c h g e k e n n z e i c h n e t , daß im Kolbenring (29) eine Ringnut (38) angeordnet ist, in der ein elastischer Dichtring (39) lagert, der sich gegen den Boden der Ringnut (38) und gegen die Innenwandung (23a) der Zylinderkammer (23) abstützt.

15. Eckenschere nach Anspruch 13 und/oder 14, d a - d u r c h g e k e n n z e i c h n e t , daß in den Flanschringen (24, 25) zur Zylinderwandung gerichtete Ringnuten (40) vorgesehen sind, in denen Dichtringe (41) lagern.

16. Eckenschere nach einem oder mehreren der Ansprüche 1 bis 15, d a d u r c h g e k e n n z e i c h - n e t , daß sie eine Arbeitstischplatte (2) und eine Bodenplatte (3) aufweist, die durch zwei vordere Säulen (4) und zwei hintere Säulen (5), die in der Draufsicht im Viereck angeordnet sind, auf vertikalem Abstand gehalten werden, wobei jeweils der Kopfbereich in der Tischplatte (2) und der Fußbereich in der Bodenplatte (3) befestigt sind.

- 5 -

17. Eckenschere nach Anspruch 16, d a d u r c h  g e -
k e n n z e i c h n e t , daß in der Tischplatte
(2) im wesentlichen zentral ein Loch (6) angeordnet
ist, das sich, von der Seite betrachtet, etwa von
den vorderen Säulen (4) nach hinten bis über die
hinteren Säulen (5) erstreckt und das vom Stößelkopf (7) des Stößels (8) durchgriffen wird, wobei
die Konturen des Lochs (6) etwa der Querschnittsraumform des Stößelkopfes (7) angepaßt sind.

18. Eckenschere nach Anspruch 16 und/oder 17,  d a -
d u r c h  g e k e n n z e i c h n e t , daß
der Stößelkopf (7) eine horizontal ausgerichtete
Tragplatte (9) aufweist, deren vorderer Bereich in
der Draufsicht dreieckförmig ist und in an sich
bekannter Weise an den Außenkanten die zwei V-förmig
zueinander angeordneten Obermesser (10) lagert,
wobei der hintere Bereich flügelartig seitlich über
den Stößel (8) ragt, und daß die Innenkante des Lochs
(6) die zwei ebenfalls V-förmig zueinander angeordneten Untermesser (11) lagert, wobei ein minimaler
horizontaler Schnittspalt (13) gebildet wird.

19. Eckenschere nach einem oder mehreren der Ansprüche
16 bis 18, d a d u r c h  g e k e n n z e i c h -
n e t , daß der Stößelkopf (7) unterhalb der Tragplatte (9) rückwärtig hinter den Messern einen vergrößerten Aufnahmeraum bildet.

20. Eckenschere nach Anspruch 19, d a d u r c h  g e -
k e n n z e i c h n e t , daß der Stößelkopf (7),
in der Draufsicht betrachtet, etwa U-förmig ausge-

- 6 -

bildet ist, wobei sich der Basissteg (7a) im Rücken der Maschine befindet und die U-Schenkel (7b) in Richtung der Messer (10, 11) weisen.

21. Eckenschere nach einem oder mehreren der Ansprüche 16 bis 20, d a d u r c h  g e k e n n z e i c h - n e t , daß der Stößel (8) sich nach unten vom Stößelkopf (7) mit einem Stößelsteg (8a) schräg nach vorne erstreckt und in einen vertikal angeordneten Stößelfuß (8b) mündet.

22. Eckenschere nach einem oder mehreren der Ansprüche 16 bis 21, d a d u r c h  g e k e n n z e i c h - n e t , daß die Kolbenstange (28) einstückig als obere Verlängerung einer hinteren Säule (5) ausgebildet ist.

23. Eckenschere nach einem oder mehreren der Ansprüche 16 bis 22, d a d u r c h  g e k e n n z e i c h - n e t , daß die Säulen (5) ein Loch in der Tischplatte durchgreifen.

24. Eckenschere nach einem oder mehreren der Ansprüche 1 bis 23, d a d u r c h  g e k e n n z e i c h - n e t , daß für den unteren Antrieb (21) ein Zylinder (42) auf der Bodenplatte (3) fest angeordnet ist und von einer Kolbenstange (28a) durchgriffen wird, die zentral im Fuß (8b) des Stößels (8) befestigt ist, wobei der Aufbau des Antriebs (21) dem Aufbau der Antriebe (19) und (20) gleicht.

25. Eckenschere nach Anspruch 24, d a d u r c h  g e -

- 7 -

k e n n z e i c h n e t , daß der freie Endbereich
der Kolbenstange (28a) in ein Loch (45) greift, das
im Boden (3) angeordnet ist und einen größeren
Durchmesser aufweist als die Kolbenstange (28a).

26. Eckenschere mit einem durch einen Stößel vertikal
beweglichen Obermesser und einem am Arbeitstisch befestigten Untermesser, sowie einem Antrieb für den
Stößel, insbesondere nach einem oder mehreren der
Ansprüche 1 bis 25, d a d u r c h   g e k e n n -
z e i c h n e t , daß zur automatischen Veränderung
des Schnittspalts (13) die Obermesser (10) en bloc
nach hinten und/oder die Untermesser (11) en bloc
nach vorne gegen eine Rückstellkraft horizontal
verschiebbar gelagert sind.

27. Eckenschere nach Anspruch 26, d a d u r c h   g e -
k e n n z e i c h n e t , daß die Obermesser (10)
an einem unter der Trägerplatte (9) gelagerten, horizontal nach hinten verschiebbaren Schlitten (47) angeordnet sind.

28. Eckenschere nach Anspruch 27, d a d u r c h   g e -
k e n n z e i c h n e t , daß die formschlüssige Führung des Schlittens (47) mit einer seitlichen Schwalbenschwanzführung (48) erfolgt.

29. Eckenschere nach Anspruch 27 und/oder 28, d a d u r c h
g e k e n n z e i c h n e t , daß rückwärtig an der
Hinterkante (53) am Schlitten (47) horizontal ausgerichtete Gleitbolzen (49) beiderseits neben der vertikalen Querschnittsebene (18) sich nach hinten erstreckend sitzen, die jeweils in einem im Stößelkopf (7) angeordneten Führungsloch (50) formschlüssig geführt
werden und sich mit einem Bolzenkopf (51) am Stößelkopf (7) abstützen, wobei zwischen der Hinterkante (53)
des Schlittens (47) und einem Anschlag im Stößelkopf
(7) ein Zwischenraum vorgesehen ist, so daß der Schlitten (47) horizontal verschiebbar ist, und daß auf dem
Gleitbolzen (49) eine Druckfeder (54) sitzt, die sich
einerseits gegen die Hinterkante (53) des Schlittens
(47) abstützt und andererseits gegen eine Bodenkante
(55) in einem für ihre Lagerung vorgesehenen, im
Stößelkopf (7) konzentrisch zum Führungsloch (50) angeordneten Ringraum (56) drückt.

30. Eckenschere nach Anspruch 29, d a d u r c h   g e -
k e n n z e i c h n e t , daß die Druckfeder (54)
zwischen Bolzenkopf (51) und Lagerkante (52) angeordnet ist.

31. Eckenschere nach Anspruch 26, d a d u r c h   g e -
k e n n z e i c h n e t , daß der die Obermesser (10)
tragende Teil (9a) der Tragplatte (9) als separates
Teil am Stößelkopfteil (7d) horizontal gleitbar lagert,
wobei zwischen dem Messerträgerteil (9a) und dem hinteren Stößelkopfteil (7d) ein Spalt (57) vorgesehen ist.

32. Eckenschere nach Anspruch 31, d a d u r c h   g e -
k e n n z e i c h n e t , daß zur Führung und Lagerung des Messerträgerteils (9a) zwei seitlich nebeneinander und jeweils neben der vertikalen Querschnittsebene (18) in einem Loch (58) im Stößelkopfteil (7d)
formschlüssig sitzende, gegen eine horizontale Bewe-

0218749

- 9 -

gung gesicherte Bolzen (59) dienen.

33. Eckenschere nach Anspruch 32, d a d u r c h   g e -
k e n n z e i c h n e t , daß der rückwärtige Kopf
(60) der Bolzen (59) an einer Anschlagkante (61) am
Stößelkopfteil (7d) anliegt und mit einem Querstift
(62) gesichert ist.

34. Eckenschere nach Anspruch 32 und/oder 33, d a d u r c h
g e k e n n z e i c h n e t , daß der vordere aus dem
Stößelkopf (7) ragende Bereich des Bolzens (59) sich
formschlüssig in ein im Messerträgerteil (9a) vorgesehenes Gleitführungsloch (63) erstreckt, wobei zwischen
der Vorderkante (64) des Lochs (63) und der Vorderkante
(65) des Bolzens (59) ein Freiraum (66) vorgesehen ist,
der breiter als der Spalt (57) ist.

35. Eckenschere nach einem oder mehreren der Ansprüche
32 bis 34, d a d u r c h   g e k e n n z e i c h n e t ,
daß der Bolzen (59) sich nach vorne verjüngt fortsetzt
und frei ein engeres Loch (67) durchgreift, wobei auf
dem aus dem Loch (67) ragenden Bereich des verjüngten
Endes des Bolzens (59) eine Schraube sitzt, die sich
gegen eine Kante (68) am Messerträgerteil (9a) abstützt.

36. Eckenschere nach einem oder mehreren der Ansprüche
32 bis 35, d a d u r c h   g e k e n n z e i c h n e t ,
daß vom Spalt (57) nach hinten ein Ringraum (69) im
Stößelkopfteil (7d) konzentrisch zum Loch (58) eingebracht ist, in dem eine Druckfeder (70) lagert und sich
gegen die Bodenkante (73) des Ringraums (69) und gegen
die Hinterkante des Messerträgerteils (9a) abstützt.

37. Eckenschere nach einem oder mehreren der Ansprüche 31 bis 36, d a d u r c h   g e k e n n z e i c h - n e t , daß eine horizontal vorspringende Gleitfläche (71) am Stößelkopfteil (7d) unterhalb des Ringraums (69) und eine horizontal vorspringende Gleitfläche (72) am Messerträgerteil (9a) vorgesehen sind, die aneinanderliegen und vertikal wirkende Kräfte beim Schneiden aufnehmen können, wobei der Spalt (57) durch die Gleitflächen (71, 72) nicht unterbrochen wird, sondern sich unterhalb der Gleit- flächen fortsetzt.

# FIG.1

FIG.2

0218749

# FIG.3

# FIG.4

0218749

# FIG.5

# FIG.6

FIG.7

FIG.8